# EUROPEAN PATENT APPLICATION

(11) **EP 0 524 678 A1**
(43) Date of publication of application: **27.01.1993**
(21) Application number: 92202094.6
(22) Date of filing: 09.07.1992
(51) Int. Cl.: B01D 67/00, B01D 71/02, C04B 41/50

(54) **Method for the manufacture of a ceramic membrane for micro or ultra filtration**

(30) Priority: 19.07.1991 NL 9101269
(71) Applicant: Hoogovens Industrial Ceramics B.V., NL-1970 CA Ijmuiden (NL)
(72) Inventor: Wittebrood, Adrianus Jacobus, NL-1991 HB Velserbroek (NL)
(74) Representative: de Bruijn, Leendert C.

(57) **Abstract**

Method for the manufacture of a ceramic membrane for micro- or ultra-filtration, wherein a porous inorganic material is formed on a bulk surface of a porous ceramic substrate.

The method comprises the steps of
a) at least partly filling the pores of a porous ceramic substrate with a liquid first reagent, and
b) bringing a bulk surface of the substrate into contact with a second reagent. The first and second reagents are chosen such that at their interface they interact to form a deposit in situ on the bulk surface of the substrate. The substrate and the deposit thereon are then dried and heated to sinter the deposit to form the porous inorganic layer as a layer extending in its thickness direction away from the bulk surface.

## Description

The invention relates to a method for the manufacture of a ceramic membrane for micro- or ultra-filtration, wherein a porous inorganic material layer is formed on bulk surface of a porous ceramic substrate in such a way that the layer extends in its thickness direction away from the substrate.

Membranes suitable for micro- and ultra-filtration typically have a pore size in the 20-1000 nm and 0.5-100 nm ranges respectively. The pore size for micro- and ultra-filtration is not precisely defined in specialist literature so that the above values serve only for aiding understanding.

Increasing use is currently being made of ceramic membranes for micro- and ultra-filtration. In contrast to the widely used membranes in polymer plastics, ceramic membranes have a much higher chemical and thermal stability. This means that not only may ceramic membranes to used at higher temperatures, but they can also be cleaned better.

Ceramic membranes are typically manufactured by applying a thin porous layer with the desired pore size onto a much thicker base layer with larger pores as a substrate. The permeability of the membrane is essentially determined by the thin filter or top layer which is supported by the base layer which gives it its mechanical strength. The base layer or substrate of a micro-filtration membrane may consist of a simple carrier with pores in the 0.1 to 50 µm range. For an ultra-filtration membrane the base layer often consists of a coarse pored carrier and a layer thereon with pores in the micro-filtration range.

Membranes composed in this way are generally manufactured by applying the material forming the top layer, for example in the form of suspension or in the form of a sol-gel, onto the base layer as a coating, and then drying and sintering the top layer.

In this the problem that usually occurs is that the small particles of the suspension or the sol-gel penetrate into the pores of the base layer with the result that cracks and/or pinholes occur in the layer formed.

It is known to saturate the substrate with water in such a manner as to discourage the suspension from being sucked into the pores of the substrate. In this way particles from the suspension are prevented from penetrating into the pores of the base layer. After being saturated with water, the substrate is brought into contact with the suspension so that a suspension film remains on the substrate. Drying this film still causes cracks and pinholes occur.

It is known from EP-A-320033 that this problem can also be solved by pretreating the base layer with a silane composition so that the affinity between base layer and suspension is reduced. Then following pretreatment with the silane composition the base layer is first dried and then the suspension is applied using a film-coating technique.

Although the method known from EP-A-320033 produces a membrane which is free from cracks and pinholes, manufacture of the membrane is comparatively complicated and costly.

As indicated above, this invention is concerned with a method comprising the formation of a layer located on a bulk surface of the substrate and extending away from the bulk surface, i.e. outside the substrate. Methods are known for forming a very thin coating layer with large surface area on the internal pore surfaces of a porous body, e.g. to form a catalyst body. For example FR-A-2182954 (corresponding to US-A-3887740) describes a process in which a porous support is first impregnated with a solution of a metal and then contacted with ammonia or an ammonia solution to cause precipitation of metal hydroxide in situ on the pore surfaces within the support. The support is thereafter heated to dry the precipitated coating. The present invention is not concerned with the formation of such internal coating layers.

The object of the invention is to provide a simple and inexpensive method for the manufacture of a compound ceramic membrane for micro- or ultra-filtration that is free from cracks or pinholes.

In accordance with the invention this method is characterized by the steps of:-
(a) at least partly filling the pores of the porous substrate with a liquid first reagent,
(b) bringing a bulk surface of the substrate into contact with a second reagent, the first and second reagents being chosen such that at their interface they interact to form a deposit in situ on the bulk surface of the substrate,
(c) drying and heating the substrate and the deposit thereon to sinter the deposit to form the desired porous inorganic layer.

By the method of the invention, a porous inorganic layer is obtained with a very good degree of coating, with a pore size which can be selected within a very broad range and with a controllable layer thickness. This effect is obtained by absorbing the first reagent into the substrate so that following the reaction with the second reagent a compressed or tight layer is obtained on the bulk surface of the substrate.

Thus the invention the first reagent brings about an interaction, e.g. a chemical or physico-chemical reaction, with the second reagent so that a deposit for the layer is formed on the surface of the substrate before drying takes place. This prevents cracks and pinholes from occurring.

The invention is contrasted with the method described above of forming an internal coating layer in a porous body, in that in the invention the reagents are selected so that the deposit is formed at the interface of the reagents at the bulk surface of the substrate, so as largely or entirely to prevent the deposit from being formed in the pres of the substrate.

In a first preferred embodiment of the invention the second reagent is a colloidal suspension of a metal oxide in a liquid, preferably a stabilized dispersion, and the reaction consists of flocculation of the suspended metal oxide to form the deposit for the porous layer. In preference the metal oxide is Al₂O₃, ZrO₂ or TiO₂. In this preferred embodiment of the invention use is made of the concept that a suspension of a metal oxide in a liquid can be stabilized, that is to say that the suspension does not deposit. This stabilisation occurs as follows. The small particles undergo two forces, namely the van der Waals force and the force which occurs through double-layer repulsion. The van der Waals force attracts and ensures that the particles have the tendency to form agglomerates. The double-layer repelling force is a repellent force which holds the particles apart. This force is electrostatic in character. When one of the forces dominates, a suspension is stable or unstable. When a van der Waals force is high relative to the double-layer repulsion force, the suspension will not be stable and the particles will flocculate. In the reverse case the repulsion force will ensure that a suspension remains stable. The repulsion force is caused by adsorption of ions onto the surface of the particle. If the particles, for example, adsorb protons (H⁺), the charge will be positive on the surface and the particles will repel each other because they have an identical charge. If the particles have no charge, they will not repel each other and they will be drawn to each other by the van der Waals force and flocculate.

Stabilizing a suspension of a metal oxide can be realized by giving the particles an electrical charge by adjusting the pH. Here it is essential to select a pH that deviates sufficiently from the iso-electric point. The iso-electric point (IEP) is that pH where the surface potential (the Zeta potential) is exactly zero. With basic oxides the iso-electric point lies at a high pH, with acid oxides it lies at a low pH. Aluminium oxide has an IEP of pH about 9, zirconium oxide has an IEP of pH about 6, and silicon oxide has an IEP of pH about 2.

The invention in this aspect makes use of the fact that a suspension flocculates at the IEP. If the substrate is impregnated with a liquid first reagent with a pH lying to one side of the IEP and then the outer surface is brought into contact with a stabilized suspension with a pH lying to the other side of the IEP, then flocculation will occur at the boundary surface. It is also possible to reverse this method by going right to the other side of the IEP with both liquids. In practice there will be a preference for one particular method, though that preference may change from one material to another, and will be different, for example, for basic aluminium oxide than for the neutral zirconium oxide or the acid silicon oxide.

In the case of the first preferred embodiment it is most preferred for the second reagent to be an acid stabilized aqueous suspension of the metal oxide Al₂O₃ and the first reagent a base. For example the suspension is stabilized with acetic acid and the first reagent is a solution of NH₄OH in water, although organic bases may also be used.

It may be said as a general rule that a basic substance such as a metal oxide like Al₂O₃ gives a stable suspension in an acid environment. Aluminium oxide forms a weak base and can adsorb protons onto its surface. This makes the Al₂O₃ particles receive positive charges and repel each other. The result is a stable suspension. The Al₂O₃ particles may be brought to flocculation by taking away the adsorbed protons with the aid of a base (OH⁻). If the substrate is made basic, that is to say by impregnating it with a base solution and bringing that into contact with an acid-stabilized Al₂O₃ suspension, then the Al₂O₃ will flocculate on the outer surface of the substrate.

In the case of ZrO₂ and TiO₂ preference is for a base-stabilized suspension and impregnation of the substrate with an acid.

As the examples described in more detail below will show, the first preferred embodiment of the invention is a simple and inexpensive way of manufacturing a micro-filtration membrane or an ultra-filtration membrane.

An advantage of the first preferred embodiment of the invention is that it permits good control of the thickness of the layer formed since thickness depends on the amount of suspended metal oxide and with the acid/base difference between the substrate and the suspension. The contact time plays an important part in this.

In the second preferred embodiment of the invention, the second reagent comprises an aqueous solution containing at least one multivalent metal ion and the reaction of the first and second reagent is a chemical precipitation which forms the deposit for the porous layer. In this it is preferable for the metal ion to be A13⁺ and/or Mg2⁺. For example the aqueous solution is a solution of Al(NO₃)₃ and the first reagent a solution of NH₄OH in water.

In this second preferred embodiment of the invention use is made of the concept that the deposit may be applied onto the substrate by a chemical reaction. The reaction which lies behind this method is, for example:

Al(NO₃)₃ + 3 NH₄OH → Al(OH)₃ + 3 NH₄NO₃

or:

Al(NO₃)₃ + 3 NH₄OH → AlO(OH) + 3 NH₄NO₃ + H₂O

The aluminium hydroxide AL(OH)₃ or boehmite AlO(OH) precipitates as a deposit onto the substrate, and on sintering is transformed into alumina (Al₂O₃).

Following sintering the layer contains pores in the ultra-filtration range and coats the substrate very well. With this embodiment of the invention it is possible to make layers with a thickness of less than 1 µm. The thickness of the layer formed is directly dependent on the concentration of the solutions used.

It is preferable for the bulk surface of the substrate on which the deposit for the top layer is formed to consist of the inside of a tube. On drying following application of the deposit water is transported to the largest surface, that is to say the outer surface of the tube. This sucks the deposit firmly onto the inner surface of the tube. It allows the deposit to settle according to the contours of the substrate and a layer is obtained which coats and adheres well.

A preferred minimum thickness of the porous inorganic is 0.2 µm, more preferably 0.5 µm.

The method of the invention can be performed repeatedly using the same or different reagents, to form a plurality of porous layers on one substrate, e.g. one porous layer on top of another. The layers have different pore sizes.

### EXAMPLES

The invention will be illustrated by reference to the following non-limitative examples, which refer to the accompanying drawings showing micro-photographs of fracture surfaces.

### Example 1

A suspension was made from 1200 g α-aluminium oxide (A 4000 SG from Alcoa) with an average particle diameter of 3.4 µm and 1200 g 0.03 M acetic acid.
Next a tubular ceramic base layer with a length of 30cm, an outside diameter of 14mm, an inside diameter of 8mm and pores of approximately 5 µm in size was immersed for 15 minutes in a 0.02 M NH₃ solution in water. It was then removed and allowed to drip out for a few seconds. Then one end of the tube was sealed off and 2.5ml of the suspension was introduced into the tube. After the other end was sealed off the tube was rolled a few times on a flat bench. Then the remaining suspension was removed from the tube and the tube dried while rolling for 30 minutes. Then the tube was sintered according to the following programme:-
1°C/min to 100°C, 30 minutes hold
2°C/min to 400°C, 60 minutes hold
3°C/min to 1400°C, 60 minutes hold
4°C/min to 50°C
The alumina layer obtained on the base layer had pores in the micro-filtration range of approximately 400 nm in size and a thickness of approximately 40 µm.

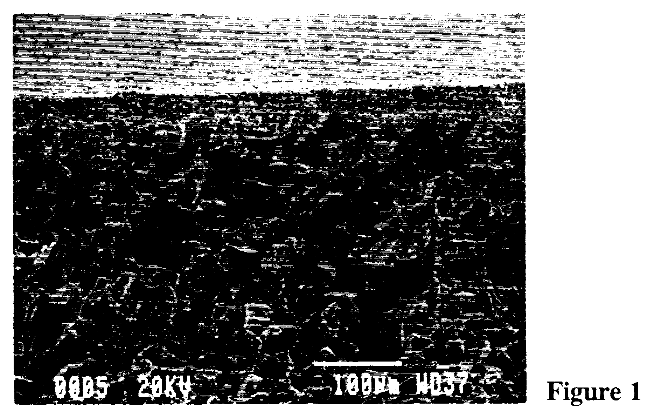

Figure 1 shows a photograph of a fracture surface of the ceramic membrane obtained.

### Example 2

A suspension was made from 500 g α-aluminium oxide (A 16 SG from Alcoa) with an average particle diameter of 0.4 µm and 500 g 0.13 M acetic acid.
Then a substrate tube which was the same as that used in Example 1 was saturated in the same way as described in Example 1 with 0.05 M ammonia and treated with the suspension in the same way as in Example 1. After drying the tube was sintered in the same way as in Example 1, except that in this case the maximum temperature was 1200°C. The layer obtained on the base tube had pores in the micro-filtration range of approximately 60 nm and a thickness of approximately 20 µm.

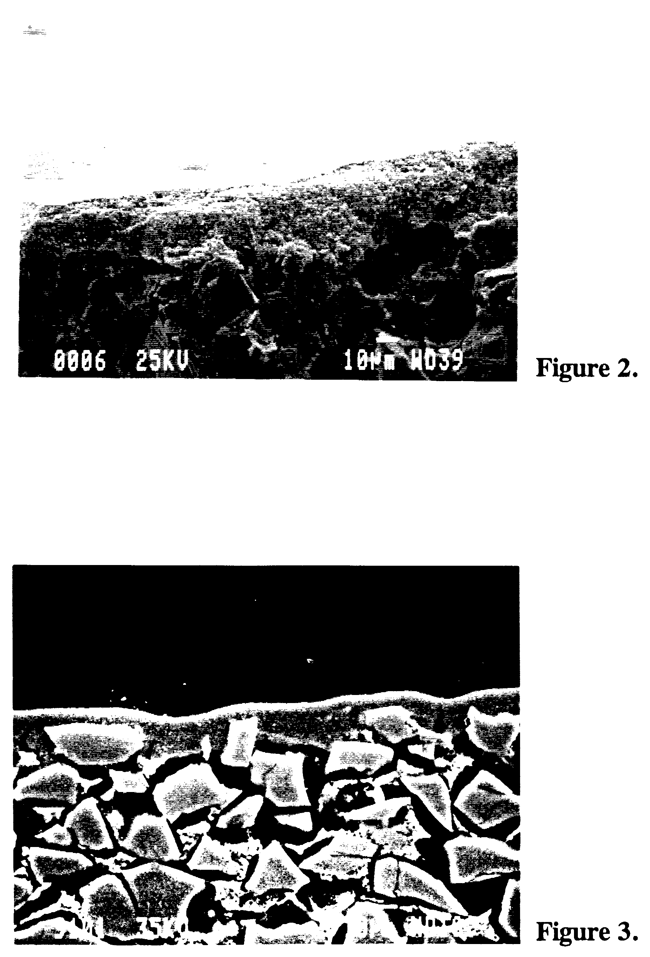

Figures 2 and 3 show photographs respectively of a fracture surface and a detail of that fracture surface of the membrane with micro-filtration layer obtained.

### Example 3

A suspension was formed of 1g γ-aluminium oxide (Degussa C) with an average particle diameter of 100 nm and 100 g 0.2 M acetic acid. A tube obtained as in Example 2 i.e. a tube having a layer of alumina on it, was used as substrate and was saturated in the same way as described in Example 1 with 0.05 M ammonia and treated with the suspension in the same way as Example 1.
After drying the tube was sintered as follows:
1°C/min to 100°C, 30 minutes hold
2°C/min to 500°C, 180 minutes hold
3°C/min to 50°C
The second layer obtained on the substrate had pores in the ultra-filtration range of approximately 14 nm and a thickness of approximately 2 µm.

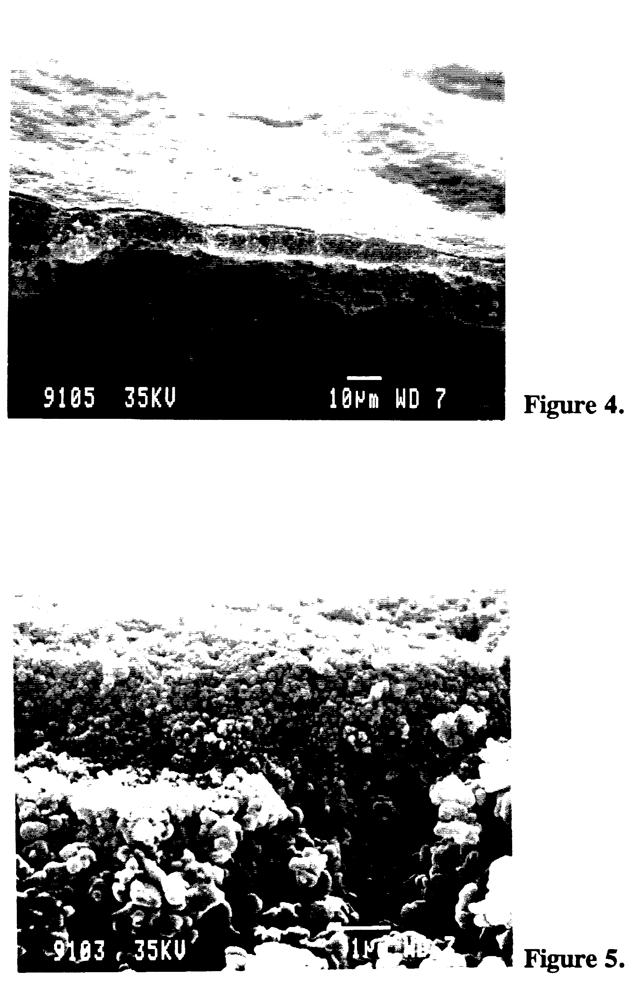

Figures 4 and 5 show photographs respectively of a fracture surface and a detail of that fracture surface of the membrane with ultra-filtration layer obtained.

### Example 4

A solution was made from 12.5 g Al(NO₃)₃. 9H₂O and 100 g water.
A further tube obtained in accordance with Example 2 was used as substrate and was saturated in the same way as described in Example 1 with 1.2 M ammonia and then treated with the aluminium solution in the same way as the tube of Example 1 was treated with the suspension. After drying the tube was sintered as described in Example 3. The layer obtained had pores in the ultra-filtration range of approximately 6 nm and a thickness of approximately 1 µm.

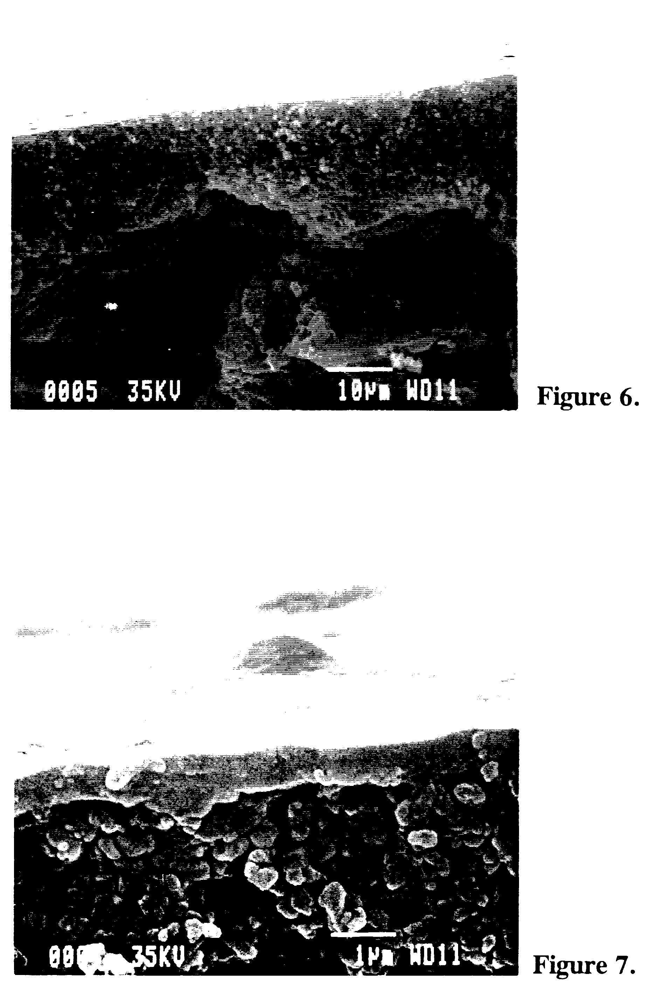

Figures 6 and 7 show photographs respectively of a surface of fracture and a detail of that fracture surface of the membrane with ultra-filtration layer obtained.

### Example 5

A solution was made from 12.5 g AL(NO₃)₃ . 9H₂O, 4.3 g Mg(NO₃)₂ . 6H₂O and 100 g H₂O.
A further tube obtained in accordance with Example 2 was saturated in the same was as described in Example 1 with 0.5 M ammonia and then treated with the aluminium/magnesium solution in the same way as the tube of Example 1 was treated with the suspension.
After drying the tube was sintered as described under Example 3.
The layer obtained had pores of 4 nm and a thickness of approximately 1µm and consisted of spinel.

## Claims

1. Method for the manufacture of a ceramic membrane for micro- or ultra-filtration, wherein a porous inorganic material layer is formed on a bulk surface of a porous ceramic substrate in such a way that the porous inorganic material layer extends in its thickness direction away from said bulk surface, by contacting the substrate with a reagent and then drying and sintering the substrate to form said inorganic material layer, characterised by the steps of
a) at least partly filling the pores of the porous substrate with a liquid first reagent,
b) bringing said bulk surface of the substrate into contact with a second reagents, the first and second reagents being chosen such that at their interface they interact to form a deposit in situ on said bulk surface of the substrate,
c) drying and heating the substrate and the deposit thereon to similar said deposit to form said porous inorganic layer.

2. Method according to claim 1 wherein said second reagent is a colloidal suspension of a metal oxide in a liquid and the interaction of the first and second reagents causes the flocculation of the suspended metal oxide, thereby forming said deposit.

3. Method according to claim 2 wherein the metal oxide is Al₂O₃, ZrO₂ or TiO₂.

4. Method according to claim 3 wherein the second reagent is an acid-stabilized suspension of Al₂O₃ and the first reagent is a base.

5. Method according to claim 4 wherein the suspension is stabilized with acetic acid.

6. Method according to claim 4 or claim 5 wherein the first reagent is a solution of ammonia in water.

7. Method according to claim 1 wherein the second reagent comprises an aqueous solution containing at least one multivalent metal ion, and the interaction of the first and second reagents causes a chemical precipitation of said metal ion or ions to form the deposit.

8. Method according to claim 7 wherein said multivalent metal ion is at least one of Al³⁺ and Mg²⁺.

9. Method according to claim 8 wherein said aqueous solution is a solution of at least one of Al(NO₃)₃ and Mg(NO₃)₂.

10. Method according to claim 8 or claim 9 wherein the first reagent is a solution of ammonia in water.

11. Method according to any one of the preceding claims wherein said substrate is a tubular body and said bulk surface on which said deposit is formed in the inside surface thereof.
